# EUROPÄISCHE PATENTANMELDUNG

(11) **EP 1 930 612 A2**
(43) Veröffentlichungstag der Anmeldung: **11.06.2008**
(21) Anmeldenummer: 07119715.6
(22) Anmeldetag: 31.10.2007
(51) Int. Cl.: F16D 23/06

(54) **Schiebemuffe einer Synchronisiereinheit**

(30) Priorität: 06.12.2006 DE 102006057471
(71) Anmelder: Schaeffler KG, 91074 Herzogenaurach (DE)
(72) Erfinder: Rheinsberg, Carsten, 91097 Oberreichenbach (DE); Schwuger, Josef, 91315 Höchstadt (DE)

(57) **Zusammenfassung**

Die Erfindung betrifft eine Schiebemuffe (1) einer Synchronisiereinheit für ein Schaltgetriebe mit einem ringförmigen Muffengrundkörper (2), an dessen Außenumfang (3) mindestens ein Funktionsteil (4, 5, 6) festgeschweißt ist. Um die Herstellkosten bei Beibehaltung einer hohen Formgenauigkeit zu reduzieren, sieht die Erfindung vor, dass mindestens eines der Funktionsteile (4, 5, 6) aus Sintermetall besteht.

## Beschreibung

### Gebiet der Erfindung

Die Erfindung betrifft eine Schiebemuffe einer Synchronisiereinheit für ein Schaltgetriebe mit einem ringförmigen Muffengrundkörper, an dessen Außenumfang mindestens ein Funktionsteil festgeschweißt ist.

### Hintergrund der Erfindung

Eine Synchronisiereinrichtung dient zum Schalten von Gangrädern in einem Getriebe. Dabei wird meist eine Anordnung von Synchronringen einem Gangrad zugeordnet. Die Anordnung hat mindestens zwei und häufig drei Synchronringe, nämlich einen Synchron-Innenring, einen Synchron-Außenring und einen dazwischen angeordneten Synchron-Zwischenring. Die Synchronringe sind längs der Drehachse der Getriebewelle bzw. längs der Drehachse der Synchronringe so ineinander geschoben, dass der Synchron-Außenring den Synchron-Innenring in Umfangsrichtung umfasst.

Schiebemuffen der eingangs genannten Art werden eingesetzt, um eine formschlüssige Momentenübertragung von der Welle zum Losrad eines Getriebes zu erreichen, wobei eine Axialverschiebung bei gleichzeitiger Aufrechterhaltung der Drehverbindung in der Synchronisiereinrichtung ermöglicht werden soll.

Hierbei sind spanend bearbeitete Schiebemuffen hinlänglich bekannt. Sie erfordern jedoch einen hohen Fertigungsaufwand und haben auch ein hohes Gewicht.

Eine Schiebemuffe der genannten Art, die spanlos gefertigt ist, ist beispielsweise aus der DE 198 20 654 A1 bekannt. Die Schiebemuffe weist dort einen durch einen spanlosen Formgebungsprozess gefertigten Muffenkörper auf, der an seinem Außenumfang eine Schaltgabelführung aufnimmt und an seinem Innenumfang eine in Richtung der Längsmittelachse verlaufende Verzahnung aufweist, die durch Ausnehmungen oder in Richtung der Längsmittelachse des Muffenkörpers ausgerichtete Nuten unterbrochen ist und deren Zähne an ihren Zahnflanken mit Aussparungen versehen sind. Der Muffenkörper ist hier durch einen spanlosen Formgebungsprozess aus Blech gefertigt und als einstückiges Bauteil ausgebildet. Die auf dem Muffengrundkörper angeordnete Schaltgabelführung ist beispielsweise durch Schweißen auf dem Außenumfang des Muffenkörpers festgelegt. Alternativ ist eine Festlegung mittels einer Schrumpfverbindung möglich.

Nachteilig bei den zuletzt genannten Schiebemuffen ist, dass Anlaufscheiben in Sonderbauformen nur schwer herstellbar sind.

Insbesondere bei speziell geformten Anlaufscheiben bzw. Anlaufringen, generell gesprochen von Funktionsteilen, die auf dem Muffengrundkörper anzuordnen sind, sind daher bei der vorbekannten Bauform Einschränkungen zu machen. Das gilt insbesondere, wenn als Funktionsteil verzahnte Elemente oder spezielle Bandagen für eine Außenkonus-Synchronisation anzuordnen sind.

### Aufgabe der Erfindung

Der vorliegenden Erfindung liegt die Aufgabe zugrunde, eine Schiebemuffe der eingangs genannten Art so fortzubilden, dass es möglich wird, auch bei relativ komplex geformten Funktionsteilen, insbesondere in Form von Anlaufscheiben, von Außenverzahnungen oder von Bandagen, eine kostengünstige Realisierung zu bewerkstelligen.

### Zusammenfassung der Erfindung

Die **Lösung** dieser Aufgabe durch die Erfindung ist dadurch gekennzeichnet, dass mindestens eines der Funktionsteile, die auf dem Muffengrundkörper anzuschweißen sind, aus Sintermetall besteht. Das mindestens eine aus Sintermetall bestehende Funktionsteil besteht dabei bevorzugt aus einem Sinterwerkstoff mit hoher Verdichtbarkeit und guter Schweißbarkeit; dies gilt insbesondere für den Sinterwerkstoff Sint D39.

Der Muffengrundkörper besteht bevorzugt aus einem profilierten Blechstreifen, der zu einem Ring gebogen und an der sich ergebenden Nahtstelle verschweißt ist. Der profilierte Blechstreifen kann durch einen Umformvorgang hergestellt sein. Er kann auf seiner einen Seite eine Verzahnung aufweisen. Dabei kann insbesondere vorgesehen werden, dass die Verzahnung auf der radial innenliegenden Fläche des Rings angeordnet ist.

Das mindestens eine Funktionselement kann als Anlaufscheibe für eine Schaltgabel ausgebildet sein. In diesem Falle ist bevorzugt vorgesehen, dass zwei im axialen Abstand nebeneinander angeordnete Anlaufscheiben auf dem Muffengrundkörper angeordnet sind. Weiterhin kann die Anlaufscheibe im Radialschnitt eine rechteckige Form aufweisen.

Das mindestens eine Funktionselement kann auch als außenverzahnter Ring ausgebildet sein.

Eine weitere Ausführungsform sieht vor, dass das mindestens eine Funktionselement als Bandage für eine Außenkonus-Synchronisation ausgebildet ist.

Der Erfindungsvorschlag ermöglicht eine sehr kostengünstige Fertigung einer Schiebemuffe mit einem Funktionsteil, wobei letzteres eine durchaus komplexe Form ausweisen kann. Durch den Vorschlag werden die Vorteile der Sintertechnologie genutzt und mit den Vorteilen der Umformtechnologie kombiniert. Die Sintertechnologie erlaubt die relativ kostengünstige Fertigung von Bauteilen, wobei diese bei geringem Gewicht mit einer endkonturnahen Form gefertigt werden können. Es ist damit eine hohe Variantenvielfalt in der geometrischen Ausgestaltung des Funktionsteils möglich, wobei die Herstellkosten relativ gering bleiben. Die Formgebung des Funktionsteils ist in großen Bereichen möglich.

Das Sintern des Funktionsteils erbringt also eine hohe Form- und Variantenvielfalt, so dass sowohl Standard-Anlaufscheiben als auch speziell verzahnte Funktionsteile (z. B. außenverzahnte Schiebemuffen mit integrierter Rückwärtsgangverzahnung) preiswert hergestellt werden können.

### Kurze Beschreibung der Figuren

In den Zeichnungen sind Ausführungsbeispiele der Erfindung dargestellt. Es zeigen:
- Fig. 1: den Radialschnitt durch eine Schiebemuffe einer Synchronisiereinrichtung mit zwei Anlaufscheiben,
- Fig. 2: den Radialschnitt einer zu Fig. 1 alternativen Ausführungsform der Schiebemuffe mit einer Außenverzahnung,
- Fig. 3: die Seitenansicht und
- Fig. 4: den Schnitt A-B gemäß Fig. 3 durch eine Schiebemuffe mit einer Außenverzahnung und
- Fig. 5: einen Teil des Radialschnitts durch eine weitere zu Fig. 1 alternative Ausführungsform der Schiebemuffe mit einer Bandage für eine Außenkonus-Synchronisation.

### Ausführliche Beschreibung der Figuren

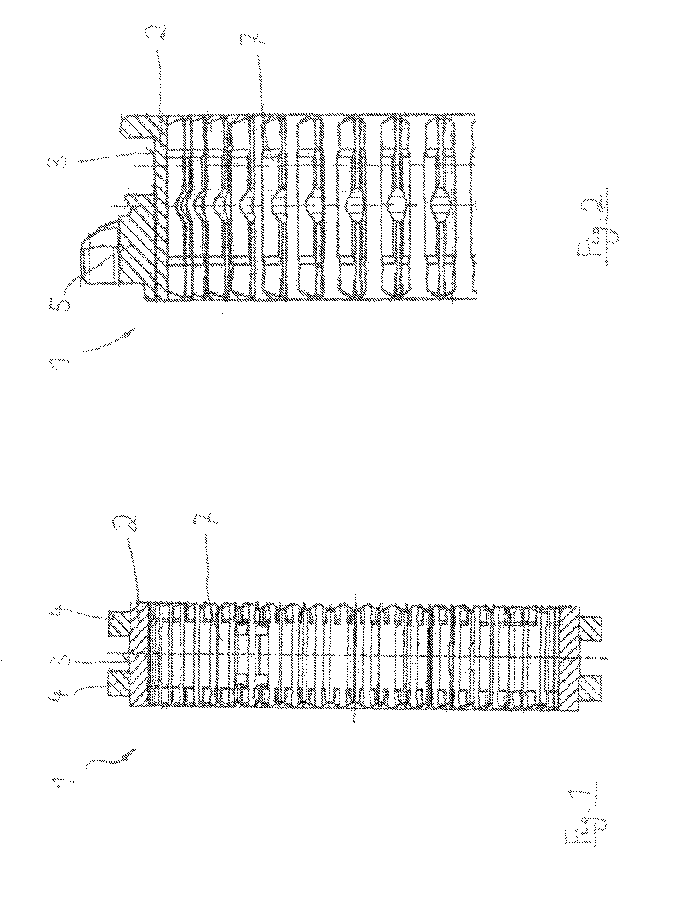

In Fig. 1 ist eine Schiebemuffe 1 im Radialschnitt zu sehen, wie sie in an sich bekannter Weise in einer Synchronisiereinrichtung eingesetzt wird. Die Schiebemuffe 1 hat einen Muffengrundkörper 2, der hier aus einem auf der einen Seite verzahnten Band gefertigt ist. Von dem Band wird ein entsprechendes Stück abgelängt und das Stück dann zu einem Ring gebogen. An der Nahtstelle werden die Enden des Bandes miteinander verscheißt, so dass sich der in Fig. 1 dargestellte Muffengrundkörper 2 ergibt. Die Verzahnung 7, die das Band trägt, ist so ausgerichtet, dass sie radial nach innen weist.

Auf dem Außenumfang 3 des Muffengrundkörpers 2 sind zwei Anlaufscheiben 4 in axialem Abstand angeordnet. Die Anlaufscheiben 4 sind dabei in einem Sinterprozess gefertigt und passgenau geformt. Nachdem die Anlaufscheiben 4 auf dem Außenumfang 3 des Muffengrundkörpers 2 positioniert worden sind, werden sie dort angeschweißt.

Das Material, aus dem die Anlaufscheiben 4 bestehen, ist der Sinterwerkstoff Sint D39, der sich sowohl durch eine hohe Verdichtbarkeit als auch durch eine gute Schweißbarkeit auszeichnet.

Durch die Kombination des durch die Umformtechnologie hergestellten Muffengrundkörpers 2 mit der Sintertechnologie, durch die die Anlaufscheiben 4 gefertigt sind, ergeben sich Vorteile bezüglich der Herstellkosten und der Formgenauigkeit der Schiebemuffe 1.

Die Lösung gemäß Fig. 2 zeichnet sich dadurch aus, dass hier auf den analog gefertigten Muffengrundkörper 2 ein Funktionsteil in Form eines außenverzahnten Rings 5 aufgebracht ist. Auch hier ist wieder der Muffengrundkörper 2 in der oben erläuterten Weise gefertigt, wobei dann der gesinterte außenverzahnte Ring 5 auf den Außenumfang 3 des Muffengrundkörpers 2 aufgesetzt und mit diesem verschweißt ist.

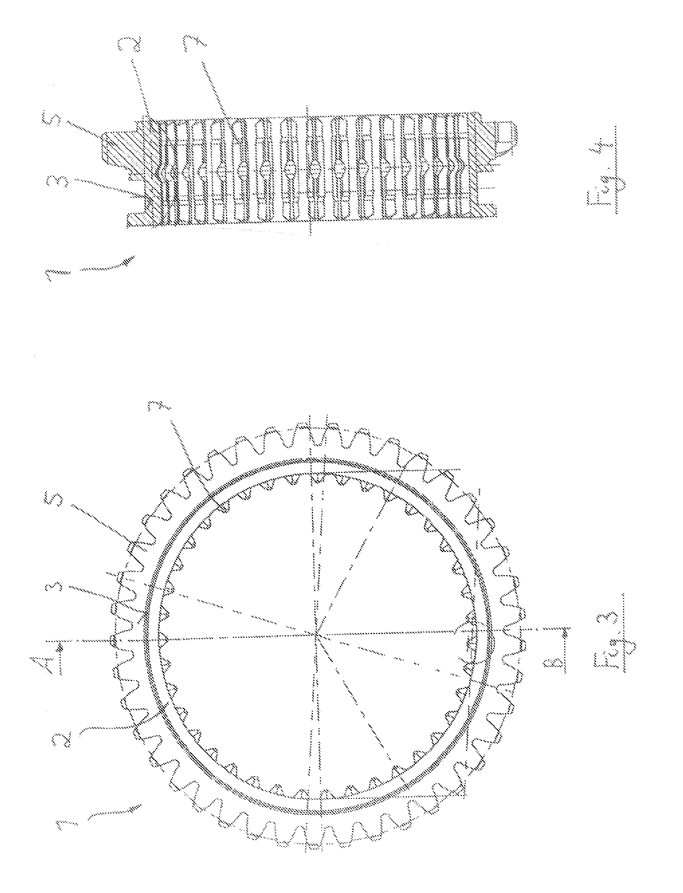

Dasselbe gilt für die Schiebemuffe 1, die in der Figuren 3 und 4 zu sehen ist. Auch hier ist der gesinterte außenverzahnte Ring 5 auf den Muffengrundkörper 2 aufgesetzt und auf diesem festgeschweißt.

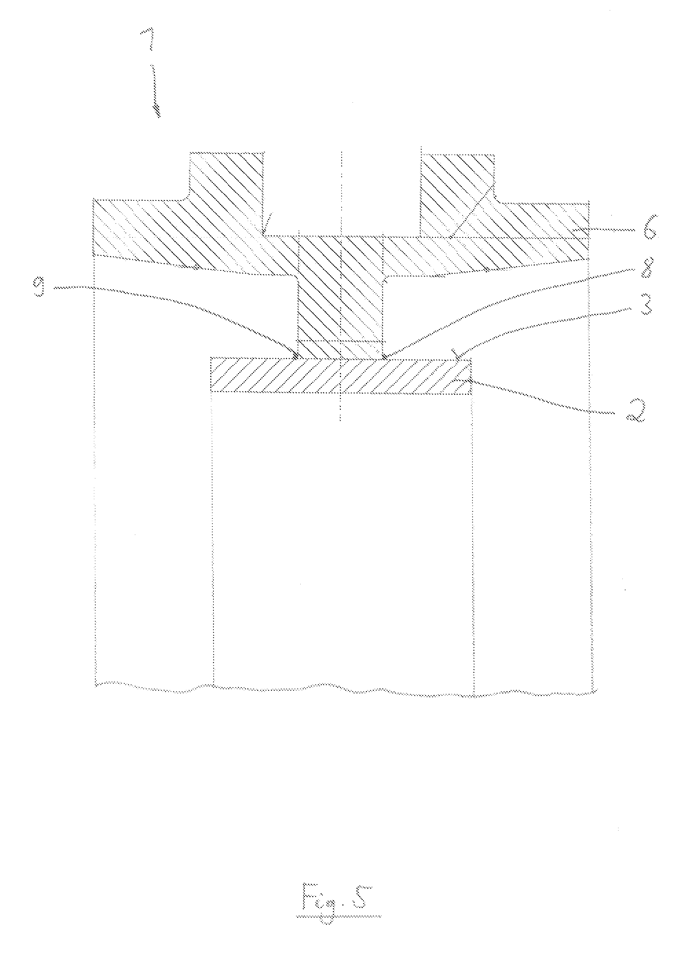

In Fig. 5 ist eine weitere alternative Ausgestaltung der Erfindung zu sehen. Hier ist auf den Muffengrundkörper 2, der wiederum wie oben erläutert gefertigt ist, eine Bandage 6 aufgesetzt und mit zwei umlaufenden Schweißnähten 8 und 9 mit dem Muffengrundkörper 2 verbunden.

Die Bandage ist für eine Außenkonus-Synchronisation vorgesehen und hat den dargestellten Radialschnitt.

### Bezugszeichenliste

- 1: Schiebemuffe
- 2: Muffengrundkörper
- 3: Außenumfang
- 4, 5, 6: Funktionsteil
- 4: Anlaufscheibe
- 5: außenverzahnter Ring
- 6: Bandage
- 7: Verzahnung
- 8: Schweißnaht
- 9: Schweißnaht

## Patentansprüche

1. Schiebemuffe (1) einer Synchronisiereinheit für ein Schaltgetriebe mit einem ringförmigen Muffengrundkörper (2), an dessen Außenumfang (3) mindestens ein Funktionsteil (4, 5, 6) festgeschweißt ist, **dadurch gekennzeichnet, dass** mindestens eines der Funktionsteile (4, 5, 6) aus Sintermetall besteht.

2. Schiebemuffe nach Anspruch 1, **dadurch gekennzeichnet, dass** das mindestens eine aus Sintermetall bestehende Funktionsteil (4, 5, 6) aus einem Sinterwerkstoff mit hoher Verdichtbarkeit und guter Schweißbarkeit, insbesondere aus dem Material Sint D39, besteht.

3. Schiebemuffe nach Anspruch 1, **dadurch gekennzeichnet, dass** der Muffengrundkörper (2) aus einem profilierten Blechstreifen besteht, der zu einem Ring gebogen und an der sich ergebenden Nahtstelle verschweißt ist.

4. Schiebemuffe nach Anspruch 3, **dadurch gekennzeichnet, dass** der profilierte Blechstreifen durch einen Umformvorgang hergestellt ist.

5. Schiebemuffe nach Anspruch 3, **dadurch gekennzeichnet, dass** der profilierte Blechstreifen auf seiner einen Seite eine Verzahnung (7) aufweist.

6. Schiebemuffe nach Anspruch 5, **dadurch gekennzeichnet, dass** die Verzahnung (7) auf der radial innenliegenden Fläche des Rings (2) angeordnet ist.

7. Schiebemuffe nach Anspruch 1, **dadurch gekennzeichnet, dass** das mindestens eine Funktionselement (4, 5, 6) als Anlaufscheibe (4) für eine Schaltgabel ausgebildet ist.

8. Schiebemuffe nach Anspruch 7, **dadurch gekennzeichnet, dass** zwei im axialen Abstand nebeneinander angeordnete Anlaufscheiben (4) auf dem Muffengrundkörper (2) angeordnet sind.

9. Schiebemuffe nach Anspruch 7, **dadurch gekennzeichnet, dass** die Anlaufscheibe (4) im Radialschnitt eine rechteckige Form aufweist.

10. Schiebemuffe nach Anspruch 1, **dadurch gekennzeichnet, dass** das mindestens eine Funktionselement (4, 5, 6) als außenverzahnter Ring (5) ausgebildet ist.

11. Schiebemuffe nach Anspruch 1, **dadurch gekennzeichnet, dass** das mindestens eine Funktionselement (4, 5, 6) als Bandage (6) für eine Außenkonus-Synchronisation ausgebildet ist.
